# EUROPÄISCHE PATENTANMELDUNG

(11) **EP 1 916 050 A1**
(43) Veröffentlichungstag der Anmeldung: **30.04.2008**
(21) Anmeldenummer: 07118234.9
(22) Anmeldetag: 10.10.2007
(51) Int. Cl.: B23K 11/31, B23K 11/28

(54) **Basiseinheit für eine Schweißzange zum Elektro-Punktschweißen sowie Schweißzange mit einer solchen Basiseinheit**

(30) Priorität: 24.10.2006 DE 202006016465 U
(71) Anmelder: Nimak GmbH, 57537 Wissen (DE)
(72) Erfinder: Nickel, Paul, 57537 Wissen (DE)
(74) Vertreter: Patentanwälte Dr. Solf & Zapf

(57) **Zusammenfassung**

Die Erfindung betrifft eine Basiseinheit (2) für eine Schweißzange (1) zum Elektro-Punktschweißen, mit einem bestimmte Funktionskomponenten enthaltenden Gehäuse (8) und mit einem an dem Gehäuse (8) angeordneten Handgriff (18), der elektrische Schaltelemente (24) aufweist, die über Steuerleitungen (25) mit den innerhalb des Gehäuses (8) angeordneten Funktionskomponenten verbunden sind. Die Steuerleitungen (25) sind intern durch das Innere des Handgriffes (18) und durch einen mit dem Gehäuse (8) verbundenen Fußabschnitt (26) des Handgriffes (18) in das Gehäuse (8) geführt. Der Handgriff (18) ist bevorzugt über Einstellmittel (30) relativ zu dem Gehäuse (8) verstellbar befestigt.

## Beschreibung

Die vorliegende Erfindung betrifft gemäß dem Oberbegriff des Anspruchs 1 eine Basiseinheit für eine Schweißzange zum Elektro-Punktschweißen, mit einem bestimmte Funktionskomponenten enthaltenden Gehäuse, und mit einem an dem Gehäuse angeordneten Handgriff, der elektrische Schaltelemente aufweist, die über Steuerleitungen mit den innerhalb des Gehäuses angeordneten Funktionskomponenten verbunden sind. Weiterhin betrifft die Erfindung auch eine mit einer solchen Basiseinheit ausgestattete Schweißzange.

Derartige Schweißzangen werden in vielen Bereichen der Herstellungstechnik, insbesondere im Automobilbau, dazu verwendet, metallische Bauteile durch elektrisches Punktschweißen (Widerstandschweißen) zu verbinden. Dazu weist die Basiseinheit zangenartige Elektrodenarme auf, die an ihren freien Enden Schweißelektroden tragen, die für den jeweiligen Punktschweißvorgang unter Zwischenlage der zu verschweißenden Bauteile, insbesondere Metallbleche, zusammengeführt und mit einer Anpresskraft beaufschlagt werden. Hierbei wird ein elektrischer Schweißstrom über die Elektrodenarme und die Elektroden durch die Bauteile geführt, die dadurch erhitzt und stoffschlüssig verbunden werden. Häufig werden handgeführte Schweißzangen eingesetzt, die über einen Trägerkranz kardanisch im Raum aufgehängt werden, so dass sie bezüglich ihrer Raumorientierung nahezu beliebig beweglich sind. Dabei erfolgt das Manipulieren im Raum über den Handgriff des Gehäuses sowie vorzugsweise über einen weiteren Handgriff, der im vorderen Bereich in der Nähe der Elektrodenarme angeordnet ist. Zum Steuern des Schweißvorgangs sind an dem Handgriff des Gehäuses bestimmte elektrische Schaltelemente, insbesondere in Form von Drucktastern, angeordnet, um über Steuerleitungen die innerhalb des Gehäuses untergebrachten Funktionskomponenten ansteuern zu können. Bei bekannten Schweißzangen der beschriebenen Art verlaufen die zu einem Steuerkabel zusammengefassten Steuerleitungen vom Handgriff aus in einem freien Kabelbogen bzw. einer Kabelschlaufe zum Gehäuse. Dies kann zu Problemen oder gar Störungen im praktischen Einsatz führen, indem beim Manipulieren der Schweißzange im Raum das Kabel an sogenannten Störgeometrien im jeweiligen Schweißbereich hängen bleiben kann.

Der vorliegenden Erfindung liegt die Aufgabe zugrunde, eine Basiseinheit bzw. eine Schweißzange der genannten Art so zu verbessern, dass sie im praktischen Einsatz störungsunanfälliger ist.

Erfindungsgemäß wird dies durch die Merkmale des Anspruchs 1 bzw. des Anspruchs 11 erreicht. Vorteilhafte Ausgestaltungen der Erfindung sind Gegenstand der abhängigen Ansprüche.

Erfindungsgemäß sind somit die Steuerleitungen intern durch das Innere des Handgriffes und durch einen mit dem Gehäuse verbundenen Fußabschnitt des Handgriffes in das Gehäuse geführt. Dies bedeutet, dass die Steuerleitungen integriert und dadurch optimal geschützt durch den Handgriff und von dessen Fußabschnitt aus praktisch unmittelbar in das Gehäuse hinein verlaufen. Die Leitungen sind durch Vermeidungen von freien Schlaufen oder Bögen somit optimal mechanisch geschützt.

Zusätzlich oder aber alternativ zu der erfindungsgemäßen Leitungsführung ist der Handgriff über Einstellmittel relativ zu dem Gehäuse verstellbar befestigt. Vorzugsweise handelt es sich um eine Verstellung bzw. Verstellmöglichkeit bezüglich drei zueinander senkrechten Raumachsen. Einzelheiten hierzu werden im Folgenden noch genauer beschrieben werden.

Anhand der Zeichnung und darin veranschaulichter, bevorzugter Ausführungsbeispiele soll die Erfindung genauer erläutert werden. Dabei zeigen:
- Fig. 1: eine Perspektivansicht einer erfindungsgemäßen Schweißzange in einer ersten Ausführung als sogenannte C-Zange,
- Fig. 2: eine Perspektivansicht analog zu Fig. 1, jedoch in einer zweiten Ausführung als sogenannte X-Zange,
- Fig. 3: eine weitere Perspektivansicht der Schweißzange gemäß Fig. 2 aus einer anderen Blickrichtung (schräg von hinten),
- Fig. 4: eine Ausschnitt-Seitenansicht im Bereich des Handgriffs,
- Fig. 5: eine Draufsicht auf den Handgriff in Pfeilrichtung V gemäß Fig. 4,
- Fig. 6: eine Ansicht in Pfeilrichtung VI gemäß Fig. 4,
- Fig. 7: eine perspektivische Seitenansicht des Bereichs des Handgriffs schräg von vorne,
- Fig. 8: eine weitere Perspektivansicht des Handgriffs schräg von hinten,
- Fig. 9 bis 13: Ansichten analog zu Fig. 4 bis 8 ohne eine Verkleidung in einem Griff-Fußabschnitt zur Einsicht auf erfindungsgemäße Griff-Einstellmittel,
- Fig. 14: eine weitere Ausführung einer erfindungsgemäßen Schweißzange in einer Darstellung analog zu Fig. 1 und 2 mit einer Ausführungsvariante im Bereich des Handgriffes,
- Fig. 15: Detailansichten analog zu Fig. 9 bis 13 in der Griff-Ausgestaltung gemäß Fig. 14.

In den verschiedenen Figuren der Zeichnung sind gleiche Teile stets mit den gleichen Bezugszeichen versehen und werden daher in der Regel auch jeweils nur einmal beschrieben.

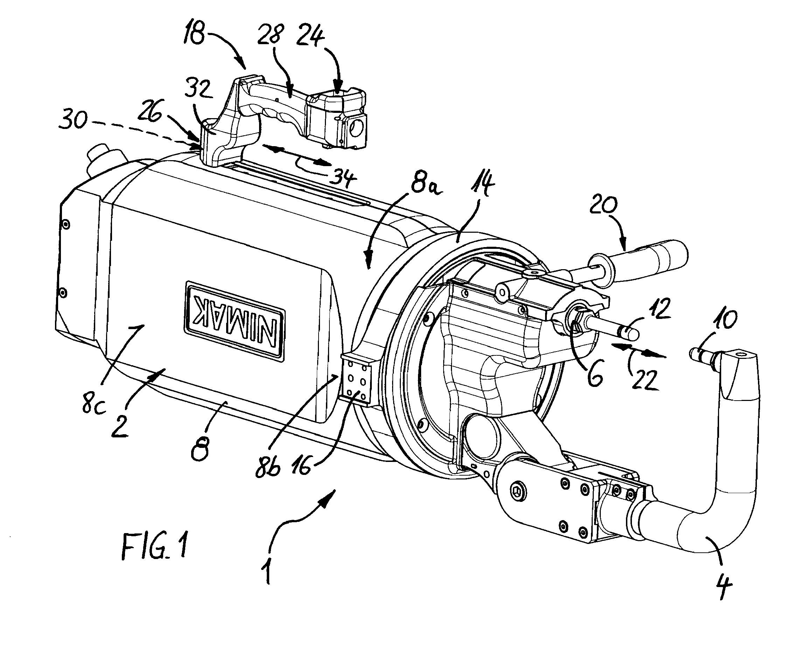

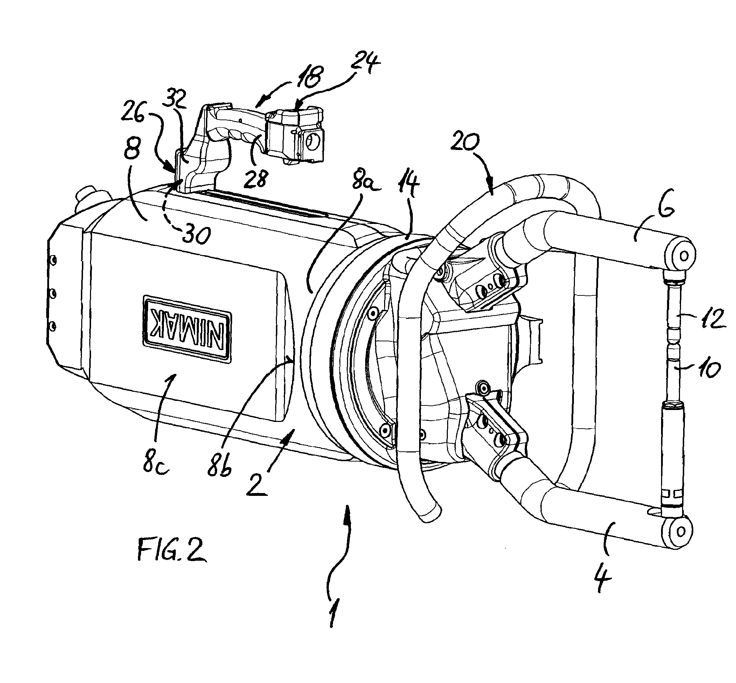

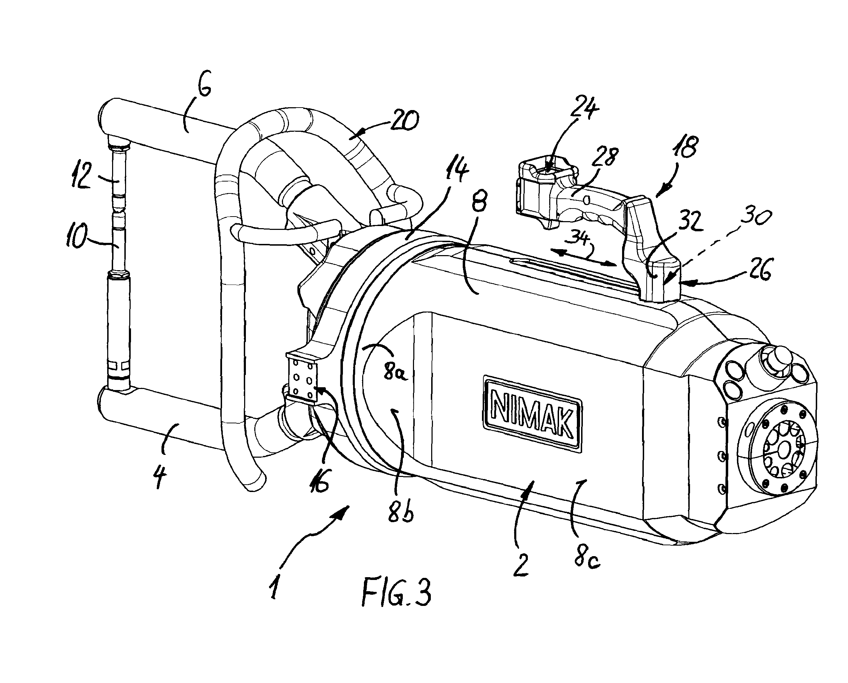

Zunächst ist in Fig. 1 einerseits und in Fig. 2 und 3 andererseits jeweils beispielhaft eine Schweißzange 1 in einer Ausführung als Handschweißzange, d. h. handgeführte Schweißzange insbesondere für den Automobilbau dargestellt. Die Schweißzange 1 besteht aus einer kompakten Basiseinheit 2 mit einer Elektrodenarm-Anordnung mit zwei Elektrodenarmen 4 und 6. Die Basiseinheit 2 enthält in einem Gehäuse 8 bestimmte, nicht genauer dargestellte Funktionskomponenten insbesondere zur Halterung der Elektrodenarme 4, 6, zum Antrieb zumindest eines der beiden Elektrodenarme 4, 6 sowie zur Versorgung von Schweißelektroden 10, 12 der Elektrodenarme 4, 6 mit einem elektrischen Schweißstrom.

Die gesamte Basiseinheit 2 einschließlich der Elektrodenarme 4, 6 ist über einen Trägerkranz 14 und über eine nicht dargestellte Aufhängung so in einem Raum aufhängbar, dass sie kardanisch beweglich ist. Der Trägerkranz 14 weist an einer Stelle seines Umfangs einen radial nach außen vorstehenden Verbindungsansatz 16 zum Befestigen an der Aufhängung auf. Zur Handhabung der Schweißzange 1 weist die Basiseinheit 2 in ihrem oberen Bereich einen z. B. pistolenartigen Handgriff 18 auf. Vorzugsweise ist noch ein zweiter Handgriff 20 in einem Übergangsbereich zu den Elektrodenarmen 4, 6 angeordnet. Mittels der Handgriffe 18, 20 läßt sich die kardanisch im Raum aufgehängte Schweißzange 1 gut manipulieren und beliebig ausrichten. Dadurch können die Elektrodenarme 4, 6 mit ihren Schweißelektroden 10, 12 optimal relativ zu den zu verschweißenden Bauteilen positioniert werden.

In der ersten Ausführung gemäß Fig. 1 ist die Schweißzange 1 als sogenannte C-Zange ausgeführt. Der eine Elektrodenarm 4 bildet zusammen mit der Basiseinheit 2 eine C-Form, und zwar als feststehender Fix-Arm. Der andere Elektrodenarm 6 ist als längsbeweglich in Doppelpfeilrichtung 22 gelagerter und antreibbarer Move-Arm ausgebildet. Durch Bewegung des Elektrodenarms 6 in Schließrichtung können die Elektroden 10, 12 unter Zwischenlage von zu verschweißenden Bauteilen, insbesondere Metallblechen, mit einer Anpresskraft zusammengeführt werden. Es wird dann ein elektrischer Schweißstrom über die Elektrodenarme 4, 6 und die Elektroden 10, 12 durch die Bauteile geführt, die dadurch erhitzt und stoffschlüssig verbunden (verschweißt) werden. Bei dieser ersten Ausführung gemäß Fig. 1 ist der zweite Handgriff 20 als seitlich bolzenartig vorstehender Griff ausgebildet.

Bei der zweiten Ausführung gemäß Fig. 2 und 3 handelt es sich bei der Schweißzange 1 um eine sogenannte X-Zange, bei der zumindest einer der Elektrodenarme 4, 6 relativ zu dem anderen Elektrodenarm schwenkbeweglich geführt und antreibbar ist, um die Schweißelektroden 10, 12 zusammen zu führen. Bei dieser Ausführung ist der zweite Handgriff 20 beispielhaft als relativ großer, den Anbindungsbereich der Elektrodenarme 4, 6 umfassender Bügelgriff ausgebildet.

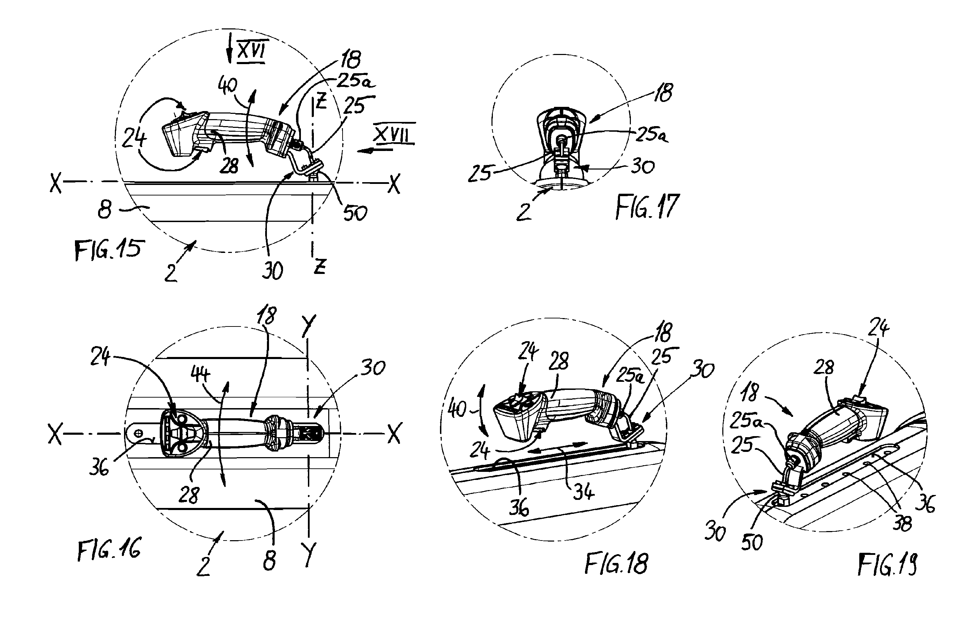

Zum Steuern des jeweiligen Schweißvorgangs und dazu der zugehörigen Funktionskomponenten innerhalb der Basiseinheit 2 weist der Handgriff 18 elektrische Schaltelemente 24 auf, die in den Zeichnungen nicht im Detail erkennbar, sondern lediglich angedeutet sind. Diese Schaltelemente 24 sind über - nur in Fig. 15 bis 19 erkennbare - Steuerleitungen 25 mit den innerhalb des Gehäuses 8 angeordneten Funktionskomponenten verbunden.

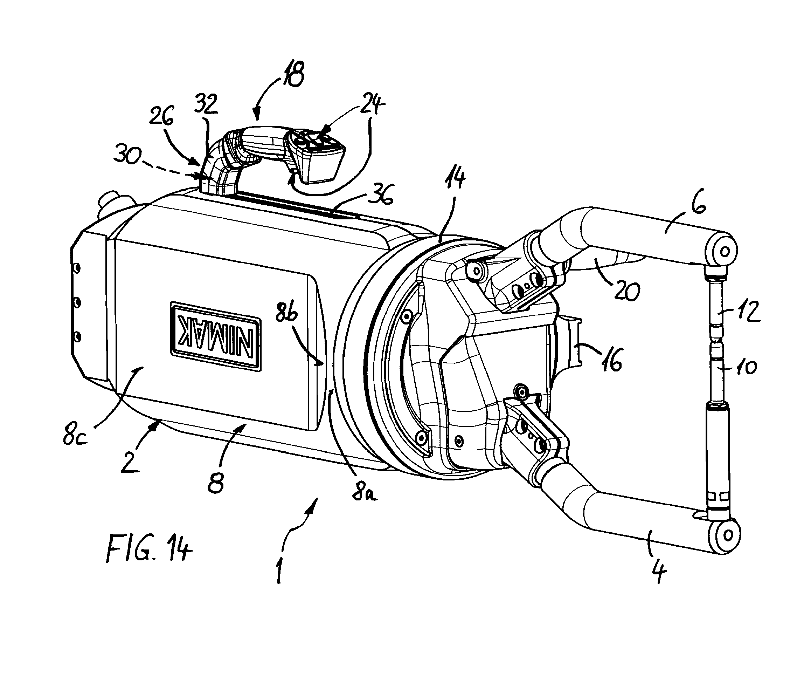

Erfindungsgemäß sind nun die Steuerleitungen 25 intern durch das Innere des Handgriffes 18 und durch einen mit dem Gehäuse 8 verbundenen Fußabschnitt 26 des Handgriffs 18 in das Gehäuse 8 geführt. Der bevorzugt pistolenartige Handgriff 18 weist einen sich - ausgehend von dem Fußabschnitt 26 frei vom Gehäuse 8 etwa parallel beabstandet - insbesondere in Richtung der Elektrodenarme 4, 6 nach vorne erstreckenden Griffabschnitt 28 auf. Im freien Endbereich des Griffabschnittes 28 ist eine Art Aufnahmegehäuse für die Schaltelemente 24 gebildet, wobei die Schaltelemente 24 - insbesondere in Form von Drucktastern und/oder Schiebeschaltern bzw. Schiebereglern - auf der vom Gehäuse 8 wegweisenden Oberseite und/oder auf der dem Gehäuse 8 zugewandten Unterseite (vgl. Fig. 14 bis 19) zur manuellen Betätigung angeordnet sind.

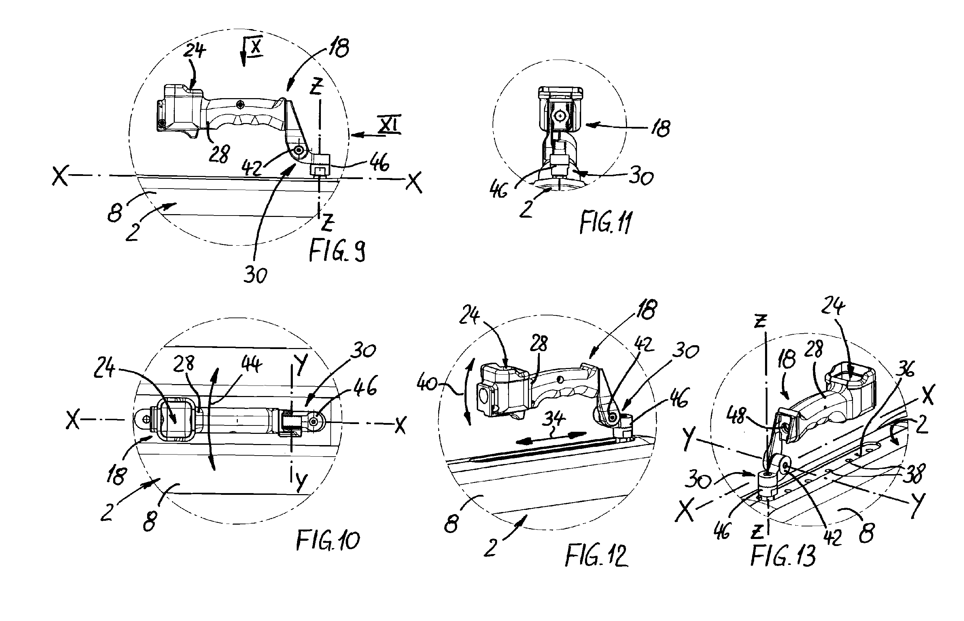

Als weiterer Erfindungsaspekt ist der Handgriff 18 über Einstellmittel 30 relativ zu dem Gehäuse 8 der Basiseinheit 2 verstellbar befestigt. Hierzu wird auf die Figuren 9 bis 13 verwiesen. Bevorzugt sind die im Bereich des Fußabschnittes 26 angeordneten Einstellmittel 30 von einer Verkleidung 32 abgedeckt; siehe hierzu die übrigen Zeichnungsfiguren 1 bis 8 im Vergleich zu den Fig. 9 bis 13.

Wie sich nun zunächst insbesondere aus den Fig. 9 bis 13 ergibt, sind die Einstellmittel 30 erfindungsgemäß derart ausgebildet, dass der gesamte Handgriff 18 in Richtung einer Längsachse X-X relativ zu dem Gehäuse 8 der Basiseinheit 2 verstellbar und - insbesondere stufig - an unterschiedlichen Stellen fixierbar ist. Diese Längsverstellbarkeit ist beispielhaft in Fig. 12 durch einen Doppelpfeil 34 veranschaulicht. Dazu weist das Gehäuse 8 gemäß Fig. 13 eine schlitz- bzw. langlochförmige Ausnehmung 36 auf, in deren Bereich eine Reihe von Halteöffnungen 38 angeordnet ist. Der Handgriff 18 bzw. sein Fußabschnitt 26 kann wahlweise über jede dieser Halteöffnungen 38 befestigt, insbesondere angeschraubt werden. Dazu erstreckt sich eine Schraubverbindung in Richtung einer zur Längsachse X-X senkrechten Hochachse Z-Z, siehe Fig. 13.

Bevorzugt sind die Einstellmittel 30 weiterhin derart ausgebildet, dass der Griffabschnitt 28 relativ zu dem Gehäuse 8 um eine zur Längsachse X-X sowie auch zur Hochachse Z-Z etwa senkrechte Querachse Y-Y in unterschiedliche Neigungen einstellbar ist.

Diese Verstellmöglichkeit ist in Fig. 12 durch einen Doppelpfeil 40 veranschaulicht. Für diese Verstellung ist im Bereich des Fußabschnittes 26 ein erstes Stellgelenk 42 vorgesehen.

In weiterer vorteilhafter Ausgestaltung ist der Handgriff 18 bzw. dessen Griffabschnitt 28 über die Einstellmittel 30 auch relativ zu dem Gehäuse 8 um die Hochachse Z-Z einstellbar (siehe hierzu den Doppelpfeil 44 in Fig. 10). Für diese Verstellung ist ein zweites Stellgelenk 46 vorgesehen.

Bei den beiden Stellgelenken 42, 46 handelt es sich bevorzugt um relativ zueinander verdrehbare Gelenkteile, die über Stirnverzahnungen ineinandergreifen und über eine Schraubverbindung verspannbar sind.

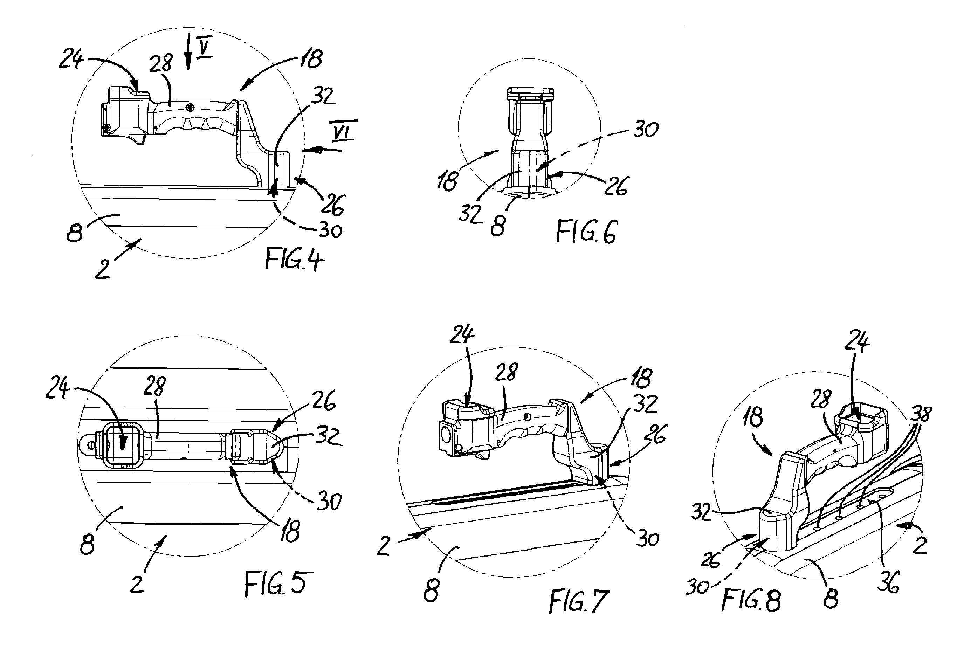

Die insbesondere als Steuerkabel 25 zusammengefassten Steuerleitungen sind in den Fig. 9 bis 13 nicht dargestellt. Sie werden innerhalb der Verkleidung 32 (vergleiche Fig. 4 bis 8) aus einer Öffnung 48 des Griffabschnittes 28 (siehe hierzu Fig. 13) und an den Einstellmitteln 30 vorbei durch eine nicht dargestellte Durchführung des Gehäuses 8 in dessen Inneres geführt. Dabei kann in einer ebenfalls nicht dargestellten Weiterbildung ein - je nach Stellung des Handgriffes 18 relativ zu dem Gehäuse 8 in Doppelpfeilrichtung 34 - mit mehr oder weniger großer Länge zwischen dem Bereich des Griff-Fußabschnittes 26 und der nicht dargestellten Gehäuse-Durchführung verlaufender Abschnitt der Steuerleitungen bzw. des Steuerkabels durch eine flexible, beispielsweise faltenbalgartige Abdeckung abgedeckt sein.

Bei der vorteilhaften Ausführungsform gemäß Fig. 14 bis 19 sind die Einstellmittel 30 durch ein klemmend feststellbares Kugelgelenk 50 gebildet. Hierbei können die Steuerleitungen 25 unmittelbar durch das Kugelgelenk 50 hindurch in das Gehäuse 8 geführt sein. Hierzu wird insbesondere auf Fig. 15 und 19 verwiesen. Das feststellbare Kugelgelenk 50 ermöglicht eine stufenlose Einstellung um die Achsen Y-Y und Z-Z; vgl. die Doppelpfeile 40 und 44. Bei dieser Ausführung ist weiterhin vorgesehen, dass der Handgriff 18 an seinem Griffabschnitt 28 auch auf seiner dem Gehäuse 8 zugewandten Unterseite ein Schaltelement 24 in Form einer Drucktaste aufweist. Im Übrigen ist auch bei dieser Ausführung der Bereich der Einstellmittel 30 im Fußabschnitt 26 durch eine Verkleidung 32 abgedeckt, siehe Fig. 14. In vorteilhafter Ausgestaltung ist das Steuerkabel 25 über eine Steckverbindung 25a (siehe Fig. 15 und 19) und dadurch lösbar mit dem Handgriff 18 verbunden, so dass der Handgriff 18 sehr einfach montierbar und auch demontierbar und damit auch auswechselbar ist. Ferner sind die oberen Schaltelemente 24 vorzugsweise an einem auswechselbaren Tastenfeldträger gehaltert, so dass der Handgriff 18 sehr einfach für verschiedenartige Steuerungen ausgelegt werden kann.

Gemäß einem weiteren Erfindungsaspekt ist das Gehäuse 8 der Basiseinheit 2 - ausgehend von einem vorderen, den Elektrodenarmen 4, 6 zugewandten und in Anpassung an den ringförmigen Trägerkranz 14 im Querschnitt etwa kreisförmigen Gehäusebereich 8a - über Schrägflächen 8b und einander gegenüberliegende Seitenflächen 8c verschmälert ausgebildet. Die Seitenflächen 8c liegen symmetrisch zu einer Mittelebene der Basiseinheit 2, wobei auch der Handgriff 18 in seiner Grundstellung symmetrisch zu dieser Mittelebene angeordnet ist. Durch diese besondere Ausgestaltung der Basiseinheit 2 bzw. des Gehäuses 8 kann eine Bedienungsperson seitlich neben der Basiseinheit 2 sehr nahe an dem Handgriff 18 stehen. Dies führt zu einer sehr komfortablen Bedienung.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Basiseinheit (2) für eine Schweißzange (1) zum Elektro-Punktschweißen, mit einem bestimmte Funktionskomponenten enthaltenden Gehäuse (8) und mit einem an dem Gehäuse (8) angeordneten Handgriff (18), der elektrische Schaltelemente (24) aufweist, die über Steuerleitungen (25) mit den innerhalb des Gehäuses (8) angeordneten Funktionskomponenten verbunden sind,
**dadurch gekennzeichnet, dass** die Steuerleitungen (25) intern durch das Innere des Handgriffes (18) und durch einen mit dem Gehäuse (8) verbundenen Fußabschnitt (26) des Handgriffes (18) in das Gehäuse (8) geführt sind.

2. Basiseinheit nach Anspruch 1,
**dadurch gekennzeichnet, dass** der Handgriff (18) einen sich ausgehend von dem Fußabschnitt (26) frei vom Gehäuse (8) beabstandet insbesondere in Richtung von Elektrodenarmen (4, 6) nach vorne erstreckenden Griffabschnitt (28) aufweist, wobei die Schaltelemente (24) in einem freien Endbereich des Griffabschnittes (28) angeordnet sind.

3. Basiseinheit insbesondere nach Anspruch 1 oder 2,
**dadurch gekennzeichnet, dass** der Handgriff (18) über Einstellmittel (30) relativ zu dem Gehäuse (8) verstellbar befestigt ist.

4. Basiseinheit nach Anspruch 3,
**dadurch gekennzeichnet, dass** die im Bereich des Fußabschnittes (26) angeordneten Einstellmittel (30) von einer Verkleidung (32) abgedeckt sind.

5. Basiseinheit nach Anspruch 3 oder 4,
**dadurch gekennzeichnet, dass** die Einstellmittel (30) derart ausgebildet sind, dass der Handgriff (18) in Richtung einer Längsachse (X-X) relativ zu dem Gehäuse (8) verstellbar und - insbesondere stufig - an unterschiedlichen Stellen fixierbar ist.

6. Basiseinheit nach einem der Ansprüche 3 bis 5,
**dadurch gekennzeichnet, dass** dieEinstellmittel(30)derart ausgebildet sind, dass der Griffabschnitt (28) relativ zu dem Gehäuse (8) um eine Querachse (Y-Y) in unterschiedliche Neigungen einstellbar ist.

7. Basiseinheit nach einem der Ansprüche 3 bis 6,
**dadurch gekennzeichnet, dass** dieEinstellmittel(30)derart ausgebildet sind, dass der Handgriff (18) bzw. dessen Griffabschnitt (28) relativ zu dem Gehäuse (8) um eine Hochachse (Z-Z) einstellbar ist.

8. Basiseinheit nach einem der Ansprüche 4 bis 7,
**dadurch gekennzeichnet, dass** die Steuerleitungen (25), insbesondere zusammengefasst als Steuerkabel, innerhalb der Verkleidung (32) über den Bereich der Einstellmittel (30) und durch eine Durchführung des Gehäuses (8) in dessen Inneres geführt sind.

9. Basiseinheit nach Anspruch 8,
**dadurch gekennzeichnet, dass** ein-jenachStellungdes Handgriffes (18) relativ zu dem Gehäuse (8) - mit mehr oder weniger großer Länge zwischen dem Bereich des Griff-Fußabschnittes (26) und der Gehäuse-Durchführung verlaufender Abschnitt der Steuerleitungen (25) bzw. des Steuerkabels durch eine flexible, beispielsweise faltenbalgartige Abdeckung abgedeckt ist.

10. Basiseinheit nach Anspruch 8,
**dadurch gekennzeichnet, dass** die Steuerleitungen (25) unmittelbar durch die Einstellmittel (30) im Fußabschnitt (26) in das Gehäuse (8) geführt sind, wobei vorzugsweise die Einstellmittel (30) von einem feststellbaren Kugelkopfgelenk gebildet sind.

11. Basiseinheit insbesondere nach einem der Ansprüche 1 bis 10,
**dadurch gekennzeichnet, dass** dasGehäuse(8)-ausgehend von einem vorderen, den Elektrodenarmen (4, 6) zugewandten und in Anpassung an einen ringförmigen Trägerkranz (14) im Querschnitt etwa kreisförmigen Gehäusebereich (8a) - über einander gegenüberliegende Seitenflächen (8c) verschmälert ausgebildet ist.

12. Schweißzange (1) zum Elektro-Punktschweißen,
**gekennzeichnet durch** eine Basiseinheit (2) nach einem der Ansprüche 1 bis 11.

13. Schweißzange nach Anspruch 12,
**dadurch gekennzeichnet, dass** die Basiseinheit (2) mit Elektrodenarmen (4, 6) verbunden ist.
